# EUROPEAN PATENT APPLICATION

(11) **EP 3 441 248 A1**
(43) Date of publication of application: **13.02.2019**
(21) Application number: 17209543.2
(22) Date of filing: 21.12.2017
(51) Int. Cl.: B60K 6/365, B60K 6/445, B60K 6/387, B60K 6/40, F16H 3/72

(54) **DRIVE UNIT FOR VEHICLE**

(30) Priority: 11.08.2017 JP 2017156261
(71) Applicant: TOYOTA JIDOSHA KABUSHIKI KAISHA, Toyota-shi, Aichi-ken, 471-8571 (JP)
(72) Inventor: ENDO, Takahito, Toyota-shi, Aichi-ken, 471-8571 (JP); KOMADA, Hideaki, Toyota-shi, Aichi-ken, 471-8571 (JP); SUZUKI, Yosuke, Toyota-shi, Aichi-ken, 471-8571 (JP); NAGAI, Hidekazu, Toyota-shi, Aichi-ken, 471-8571 (JP); YOSHINO, Hirotsugu, Toyota-shi, Aichi-ken, 471-8571 (JP); YASUI, Hiroki, Toyota-shi, Aichi-ken, 471-8571 (JP)
(74) Representative: Winter, Brandl, Fürniss, Hübner, Röss, Kaiser, Polte - Partnerschaft mbB

(57) **Abstract**

A drive unit for a vehicle having a shortened axial length. A drive unit 10 includes a first planetary gear unit 14, a second planetary gear unit 15, a first clutch device 16, and a second clutch device 17. The first planetary gear unit 14 and the second planetary gear unit 15 are disposed adjacently in an axial direction, and transmit an engine torque to a cylindrical section 67 to which a drive wheel 30 is coupled. A second ring gear R2 of the second planetary gear unit 15 is formed on an inner circumference of the cylindrical section 67. An output gear 18 is formed on an outer circumference of the cylindrical section 67. The first planetary gear unit 14 is disposed on an inner circumferential side of an inner smooth region 67c where the second ring gear R2 is not formed in the inner circumference of the cylindrical section 67.

## Description

### CROSS REFERENCE TO RELATED APPLICATION

The present disclosure claims the benefit of Japanese Patent Application No. 2017-156261 filed on August 11, 2017 with the Japanese Patent Office.

### BACKGROUND

### Field of the Invention

Embodiments of the present disclosure relate to the art of a drive unit for a vehicle having a pair of planetary units and a pair of clutch devices.

### Discussion of the Related Art

JP-A-2017-7437 describes a drive unit for a hybrid vehicle that, in order to increase diversity of operating modes, can generate a torque for running from all of the following drive sources, that is, an engine, a first motor, and a second motor.

According to the teachings of JP-A-2017-7437, a first clutch device selectively couples either of a first input element and a first reaction force element configuring rotary elements of a first planetary gear set and a second reaction force element configuring a rotary element of a second planetary gear set. A second clutch device selectively couples at least any two rotary elements in the second planetary gear set, thereby integrating the second planetary gear set.

PCT international publication WO 2014/147843 and JP-A-2009-257518 also describe a drive unit for a hybrid vehicle including a pair of planetary gear sets and having a reduced axial length. In the drive unit taught by WO 2014/147843, a first ring gear of a first planetary gear set and a second ring gear of a second planetary gear set are coupled. In the drive unit taught by JP-A-2009-257518, a first planetary gear set and a second planetary gear set are disposed adjacently, and a ring gear of the first planetary gear set and a ring gear of the second planetary gear set are integrated.

JP-A-2017-71241 also describes a drive unit for a hybrid vehicle in which a pair of clutch devices are disposed on both sides of a planetary gear set. In the drive unit taught by JP-A-2017-71241, a ring gear of the planetary gear set is formed on one side in an axial direction on an inner circumference of an output gear, and the clutch device is disposed in a space of an inner diameter on the other side in the axial direction.

However, in the drive unit taught by JP-A-2017-7437, a first ring gear of the first planetary gear set and a second ring gear of the second planetary gear set are not coupled in the manner described in WO 2014/147843. Therefore, unlike in the drive unit described in JP-A-2009-257518, it is not possible for an output gear to be provided on an outer circumference and for the first ring gear and the second ring gear to be aligned in an axial direction on an inner circumference. Therefore, the drive unit in which fellow ring gears are not coupled needs to be shortened in the axial direction.

If a pair of planetary gear sets are assumed provided aligned in the axial direction in the drive unit described in JP-A-2017-71241, it results in the clutch device being disposed between the planetary gear sets. Therefore, the likes of a bearing or a housing supporting the bearing must each be disposed between the clutch device and the planetary gear set, and there is a possibility that the drive unit itself lengthens in the axial direction.

### SUMMARY

Aspects of embodiments of the present disclosure have been conceived noting the foregoing technical problems, and therefore an object of embodiments of the present disclosure is to provide a drive unit for a vehicle that by shortening an axial length can be fitted easily on an automobile.

The present disclosure is applied to a drive unit for a vehicle including: an engine; an output gear of cylindrical shape coupled to a drive wheel; a complex planetary unit formed by a first planetary unit and a second planetary unit that transmits to the drive wheel a drive torque outputted from the engine; a first engagement device that, by coupling any two rotary elements of the complex planetary unit, establishes a certain torque transmission path in the complex planetary unit; and a second engagement device that, by coupling any two rotary elements of the complex planetary unit, establishes another torque transmission path in the complex planetary unit. In the drive unit for a vehicle, the first planetary unit, the second planetary unit, the first engagement device, and the second engagement device are disposed on a rotational central axis parallel to an output shaft of the engine. In order to achieve the above-described object, the first planetary unit and the second planetary unit are disposed adjacently in the rotational axis direction on an inner circumferential side of the output gear. In addition, any one rotary element of rotary elements configuring the first planetary unit and any one rotary element of rotary elements configuring the second planetary unit are coupled, and any one ring gear of a first ring gear in the rotary elements of the first planetary unit and a second ring gear in the rotary elements of the second planetary unit is coupled to the output gear. Furthermore, the first engagement device and the second engagement device are disposed on one side or the other side of the complex planetary unit in the rotational axis direction.

In a non-limiting embodiment, the output gear may be formed on an outer circumferential surface of a cylindrical section, and the one ring gear and an inner smooth region adjacent to the one ring gear may be formed on an inner circumferential surface of the cylindrical section. In addition, an inner diameter of the cylindrical section may be larger than an outer diameter of one of the planetary units comprising the other ring gear of the first ring gear and the second ring gear, and the one of the planetary units may be disposed on an inner side of the inner smooth region.

In a non-limiting embodiment, an inner diameter of the cylindrical section may be larger than outer diameters of the first planetary unit and the second planetary unit, and the first engagement device and the second engagement device may be configured so as to selectively couple the cylindrical section and the one ring gear.

In a non-limiting embodiment, the first engagement device and the second engagement device may be disposed adjacently in the rotational central axis direction.

In a non-limiting embodiment, the drive unit for a vehicle may further include a housing that houses the first planetary unit, the second planetary unit, and the cylindrical section. In addition, one end section of the cylindrical section may be rotatably supported by one of bulkheads formed in the housing via one of bearings, and the other end section of the cylindrical section may be rotatably supported by another of bulkheads formed in the housing via another of bearings.

In a non-limiting embodiment, the drive unit for a vehicle may further include a motor-generator. The first planetary unit may have: a first rotary element to which any one of the engine, the motor-generator, and the drive wheel is coupled; a second rotary element to which any other one of the engine, the motor-generator, and the drive wheel is coupled; and a third rotary element. The second planetary unit may have: a fourth rotary element to which yet another one of the engine, the motor-generator, and the drive wheel is coupled; a fifth rotary element to which the third rotary element is coupled; and a sixth rotary element. The first engagement device may selectively couple the sixth rotary element and the first rotary element or the second rotary element, and the second engagement device may be configured so as to selectively couple at least any two rotary elements of the fourth rotary element, the fifth rotary element, and the sixth rotary element.

Due to the drive unit of the present disclosure, any one ring gear of the ring gears of a first planetary unit and a second planetary unit is directly or indirectly coupled to an output gear, and is disposed adjacently in an axial direction on an inner circumferential side of the output gear. Moreover, a first engagement device and a second engagement device are disposed at one of both ends along the axial direction on the inner circumferential side of the output gear with respect to the first planetary unit and the second planetary unit. Therefore, the first planetary unit, the second planetary unit, the first engagement device, and the second engagement device can be disposed tightly packed in the axial direction. In this way, an axial length of the drive unit is shortened, hence the drive unit may be fitted easily on automobiles.

Moreover, since the ring gear is formed integrally on an inner circumference of a cylindrical section on whose outer circumference the output gear is provided and another planetary unit is disposed on an inner circumferential side of a region where the ring gear is not formed, the axial length of the drive unit can be further shortened whereby the drive unit may be fitted more easily on automobiles.

Furthermore, since the inner circumference of the cylindrical section and the one ring gear are coupled via the first engagement device or the second engagement device, the first engagement device or the second engagement device may be disposed between the cylindrical section and the first planetary unit or the second planetary unit, for example. Therefore, the axial length of the drive unit can be further shortened whereby the drive unit may be fitted more easily on automobiles.

In addition, since the first engagement device and the second engagement device are disposed aligned in the axial direction, outer diameters of the first engagement device and the second engagement device can be made larger, for example. Therefore, when, for example, an engagement type clutch is adopted as the first engagement device and the second engagement device, tooth surface strength can be improved.

Moreover, one end section and the other end section supported by a housing via bearings are provided at both ends of an output-oriented rotary member of the external circumference of the cylindrical section. Therefore, a member coupling between the planetary unit and the engagement device or a member connecting between the engagement device and an actuator for engaging/disengaging the engagement device need not be disposed more lengthened in the axial direction so as to detour the bearings, compared to when both ends of the inner circumference of the cylindrical section are supported by the housing via the bearings, hence the axial length of the drive unit can be shortened whereby the drive unit may be fitted easily on automobiles.

Furthermore, since the drive unit includes three rotary members, that is, an input-oriented rotary member to which an engine is coupled, a reaction force-oriented rotary member to which a motor-generator having a power generation function is coupled, and the output-oriented rotary member, operating modes can be diversified.

### BRIEF DESCRIPTION OF THE DRAWINGS

Features, aspects, and advantages of exemplary embodiments of the present disclosure will become better understood with reference to the following description and accompanying drawings, which should not limit the disclosure in any way.
Fig. 1 is a skeleton view showing one example of a drive unit for a vehicle according to the embodiment of the present disclosure;
Fig. 2 is a cross-sectional view of the drive unit shown in Fig. 1;
Fig. 3 is an enlarged cross-sectional view showing a supply path of a lubricating oil in the drive unit shown in Fig. 2;
Fig. 4 is a schematic diagram showing at least one embodiment of the drive unit in which a ring gear is indirectly coupled to an inner circumference of a cylindrical section;
Fig. 5 is a schematic diagram showing at least one embodiment of the drive unit in which a first clutch device and a second clutch device are disposed on the inner circumference of the cylindrical section; and
Fig. 6 is a schematic diagram showing at least one embodiment of the drive unit in which the first clutch device and the second clutch device are disposed aligned on an engine side in an axial direction with respect to a complex planetary gear unit.

### DETAILED DESCRIPTION OF THE PREFERRED EMBODIMENT(S)

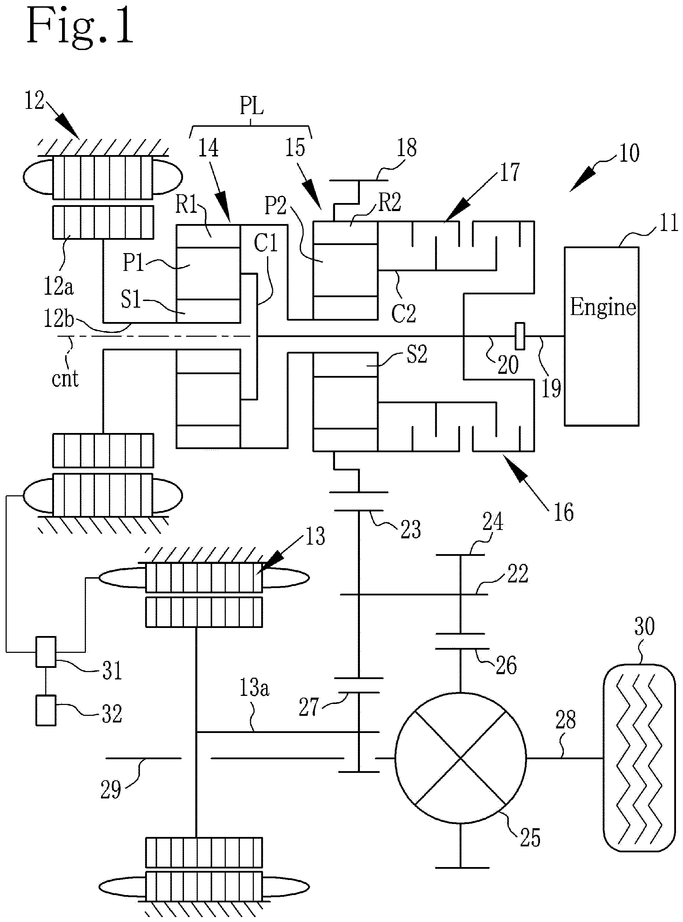

Embodiments of the present disclosure will be described with reference to the drawings. Fig. 1 is a skeleton view showing one example of a drive unit for a vehicle used in the present disclosure. As shown in Fig. 1, the drive unit 10 includes an engine 11, a first motor 12, a second motor 13, a first planetary gear unit 14 serving as a power split mechanism, a second planetary gear unit 15, a first clutch device 16, a second clutch device 17, and an output gear 18, and is configured to be suitable for a front engine front drive vehicle (FF vehicle) or a rear engine rear drive vehicle (RR vehicle), for example. A motor-generator is adopted as the first motor 12, and a speed of the engine 11 is controlled by the first motor 12. In addition, the second motor 13 is driven by electric power generated by the first motor 12, and drive power outputted by the second motor 13 is added to drive power for running. Note that a motor-generator is adopted also as the second motor 13. The output gear 18 transmits to a drive wheel 30 a drive torque transmitted from the second planetary gear unit 15.

The first planetary gear unit 14 is configured so as to divide power outputted by the engine 11 between a first motor 12 side and an output gear 18 side, and may adopt a single pinion type planetary gear unit, for example. Note that the first planetary gear unit 14 includes a planetary unit that performs differential action among three rotary elements. The first planetary gear unit 14 includes: a first sun gear S1; a first ring gear R1 as an internal tooth gear disposed concentrically with respect to the first sun gear S1; a plurality of first pinion gears P1 interposed between the first sun gear S1 and the first ring gear R1; and a first carrier C1 that rotatably supports the first pinion gears P1.

In the first planetary gear unit 14, the first sun gear S1 is coupled to the first motor 12 so as to serve as a reaction element, the first ring gear R1 serves as an output element, and the first carrier C1 is coupled to the engine 11 so as to serve as an input element. In the present embodiment, the first carrier C1 corresponds to a first rotary element, the first sun gear S1 corresponds to a second rotary element, and the first ring gear R1 corresponds to a third rotary element.

Specifically, an input shaft 20 coupled to an output shaft 19 of the engine 11 is coupled to the first carrier C1, and power outputted by the engine 11 is inputted to the first carrier C1. Note that instead of the first carrier C1 and the input shaft 20 being directly coupled, the first carrier C1 and the output shaft 19 may be indirectly coupled via a transmission mechanism such as a gear mechanism. Moreover, a mechanism such as a damper mechanism or a torque converter (neither of which is illustrated) may be disposed between the output shaft 19 and the input shaft 20.

A rotor 12a of the first motor 12 is coupled to the first sun gear S1. In the example shown in Fig. 1, the first planetary gear unit 14 and the first motor 12 are disposed on a rotational central axis cnt of the output shaft 19, and the first motor 12 is disposed on an opposite side to an engine 11 side across the first planetary gear unit 14. The second planetary gear unit 15 is disposed between the first planetary gear unit 14 and the engine 11, on the rotational central axis cnt, aligned in a direction of the axis cnt. The second planetary gear unit 15 serves as a transmission, and may adopt a single pinion type planetary gear unit, for example. The second planetary gear unit 15 includes a planetary unit that performs differential action by three rotary elements.

The second planetary gear unit 15 includes: a second sun gear S2; a second ring gear R2 as an internal tooth gear disposed concentrically with respect to the second sun gear S2; a plurality of second pinion gears P2 interposed between the second sun gear S2 and the second ring gear R2; and a second carrier C2 that supports the second pinion gears P2. The first ring gear R1 is coupled to the second sun gear S2, and the output gear 18 is coupled to the second ring gear R2. In the present embodiment, the second sun gear S2 corresponds to a fifth rotary element, the second ring gear R2 corresponds to a fourth rotary element, and the second carrier C2 corresponds to a sixth rotary element.

By the first planetary gear unit 14 and the second planetary gear unit 15 being coupled via the first clutch device 16 as a first engagement device, the first planetary gear unit 14 and the second planetary gear unit 15 form a complex planetary gear unit PL. To this end, specifically, the first clutch device 16 selectively couples the second carrier C2 of the second planetary gear unit 15 and the first carrier C1 of the first planetary gear unit 14. For example, the first clutch device 16 may include a friction type clutch device such as a wet multiplate clutch or may include an engagement type clutch device such as a dog clutch. In the complex planetary gear unit, the first carrier C1 and second carrier C2 coupled to each other serve as an input element, the first sun gear S1 serves as a reaction force element, and the second ring gear R2 serves as an output element.

The second planetary gear unit 15 is integrated overall by the second clutch device 17 as a second engagement device. This second clutch device 17 is configured so as to couple at least any two rotary elements in the second planetary gear unit 15. For example, the second clutch device 17 may include a friction type clutch device such as a wet multiplate clutch or may include an engagement type clutch device such as a dog clutch.

In the embodiment shown in Fig. 1, the second clutch device 17 couples the second carrier C2 and the second ring gear R2. Moreover, the first clutch device 16 and the second clutch device 17 are disposed on the rotational central axis cnt, and are disposed on an opposite side to the first planetary gear unit 14 across the second planetary gear unit 15.

In the drive unit 10, a counter shaft 22 is disposed parallel to the rotational central axis cnt. The output gear 18 is attached to one end of the counter shaft 22 so as to engage with a driven gear 23, and a drive gear 24 is attached to the other end of the counter shaft 22 so as to engage with a ring gear 26 in a differential gear unit 25 as a final reduction gear unit. Furthermore, a drive gear 27 attached to a rotor shaft 13a in the second motor 13 engages with the driven gear 23. Therefore, in the driven gear 23, power or torque outputted by the second motor 13 is added to power or torque outputted from the output gear 18. Power or torque synthesized in this way is delivered to right and left drive shafts 28, 29 from the differential gear unit 25. The drive wheels 30 are attached to the drive shafts 28, 29.

The first motor 12 and the second motor 13 are connected to a power supply section 31 that includes the likes of a battery, a capacitor, an inverter, and a converter (none of which are illustrated). The power supply section 31, the engine 11, the first clutch device 16, and the second clutch device 17, etc. are controlled by an electronic control unit 32 configured having a microcomputer as its main constituent. For example, the first motor 12 is operated as a generator, and electric power generated by the first motor 12 is supplied to the second motor 13, whereby the second motor 13 is operated as a motor. In addition, electric power is supplied to each of the motors 12, 13 from the power supply section 31, whereby drive power for running is outputted from these motors 12, 13. Alternatively, the second motor 13 is operated as a generator during deceleration, whereby generated electric power charges the power supply section 31.

An operating mode of the drive unit 10 can be switched to any of a first operating mode to a fourth operating mode by manipulating the pair of clutch devices 16, 17 by the electronic control unit 32.

The first operating mode is a mode where the vehicle is powered by the second motor 13 as an electric vehicle (an EV mode). In the first mode, each of the clutch devices 16, 17 is released, the second motor 13 is driven as a motor by electric power of the power supply section 31, and the engine 11 and first motor 12 are stopped.

The second operating mode is a High mode of a hybrid mode, and the vehicle is powered by the engine 11. The second mode is established by engaging the first clutch device 16 only and thereby coupling the first carrier C1 and the second carrier C2. In the second operating mode, power of the engine 11 is divided between the output gear 18 and the first motor 12. In this situation, the first motor 12 is operated as a generator, and the second motor 13 is operated as a motor by electric power generated by the first motor 12. Power outputted by the second motor 13 is added to power outputted from the output gear 18.

The third operating mode is a Low mode of the hybrid operating mode, and is established by engaging the second clutch device 17 while releasing the first clutch device 16. When the first clutch device 16 is released, the first ring gear R1 and the second carrier C2 are coupled between the first planetary gear unit 14 and the second planetary gear unit 15. In this situation, because the second clutch device 17 is engaged, all of the rotary elements of the second planetary gear unit 15 rotate integrally. In other words, power is transmitted to the output gear 18 without being changed by the second planetary gear unit 15. On the other hand, the first motor 12 is rotated by power delivered to a first motor 12 side, and the second motor 13 is driven as a motor by electric power generated by the first motor 12. Power outputted by the second motor 13 is added to power outputted from the output gear 18. Note that in the present embodiment, a mode where a maximum value of theoretical transmission efficiency is a shift ratio smaller than a shift ratio of the Low mode, will be called the High mode. Theoretical transmission efficiency refers to a ratio of power inputted to the first carrier C1 of the first planetary gear unit 14 and power outputted from the second ring gear R2 of the second planetary gear unit 15. Specifically, it is a ratio of power transmitted mechanically from the engine to the drive wheel, with respect to power outputted from the engine, assuming mechanical loss such as friction to be zero. Therefore, when rotation of the first motor 12 is set to zero whereby power of the engine 11 is all transmitted to the output gear 18, the theoretical transmission efficiency attains a maximum efficiency of "1".

The fourth operating mode is a fixed mode, and is established by engaging both the first clutch device 16 and the second clutch device 17. Engagement of the second clutch device 17 results in the rotary elements of the second planetary gear unit 15 rotating integrally. Moreover, engagement of the first clutch device 16 results in the engine 11 being coupled to the second carrier C2 in the second planetary gear unit 15. Therefore, power outputted by the engine 11 is transmitted directly to the output gear 18 via the second planetary gear unit 15. Additionally, in the first planetary gear unit 14, the first carrier C1 is coupled to the engine 11, and, moreover, the first ring gear R1 is coupled to the engine 11 via the second planetary gear unit 15 and the first clutch device 16. Therefore, the first planetary gear unit 14 has all of its rotary elements rotating as one body and does not perform a differential action.

In the fourth operating mode, the first motor 12 is operated as a motor by electric power of the power supply section 31. Output torque outputted from the first motor 12 is transmitted to the output gear 18 without being changed, via the first planetary gear unit 14 and the second planetary gear unit 15. In this way, power of both the engine 11 and of the first motor 12 are outputted from the output gear 18. Moreover, in the fourth operating mode, the second motor 13 is operated as a motor by electric power of the power supply section 31. Power outputted by the second motor 13 is added to power of the engine 11 and of the first motor 12, in a portion of the driven gear 23. That is, in the fourth operating mode, the engine 11 and first motor 12 and the second motor 13 all generate drive force for running.

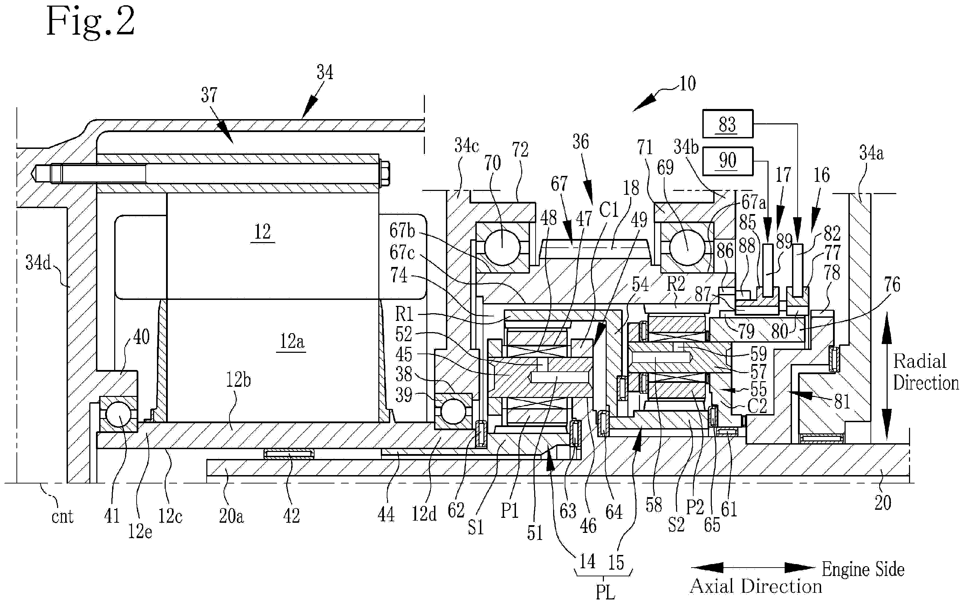

Fig. 2 is a cross-sectional view showing members disposed on the common rotational central axis cnt as the input shaft 20 in the drive unit 10 shown in Fig. 1. Moreover, the members disposed on the rotational central axis cnt are disposed symmetrically with respect to the rotational central axis cnt, and in the cross-sectional view shown in same Fig. 2, are depicted omitting a half below the rotational central axis cnt. Furthermore, in same Fig. 2, rightward of the rotational central axis cnt is an engine 11 side.

As shown in Fig. 2, the drive unit 10 is covered by a housing 34. The housing 34 includes, integrally, in order from the engine 11 side, a first bulkhead 34a, a second bulkhead 34b, a third bulkhead 34c, and a fourth bulkhead 34d.

The first planetary gear unit 14, the second planetary gear unit 15, the first clutch device 16, and the second clutch device 17 are disposed in a first housing chamber 36 which is partitioned by the first bulkhead 34a and the third bulkhead 34c. Specifically, the first planetary gear unit 14 and the second planetary gear unit 15 are disposed adjacently in an axial direction in the first housing chamber 36, and the first clutch device 16 and the second clutch device 17 are disposed between the second planetary gear unit 15 and the engine 11. Note that the first clutch device 16 and the second clutch device 17 may be disposed between the first planetary gear unit 14 and the third bulkhead 34c, for example. The second bulkhead 34b partitions between a unit of the first clutch device 16 and second clutch device 17 and a unit of the first planetary gear unit 14 and second planetary gear unit 15, and an inner circumferential side of the second bulkhead 34b is open.

The first motor 12 is fixed in a second housing chamber 37 which is partitioned by the third bulkhead 34c and the fourth bulkhead 34d. A through hole 38 whose axis coincides with the rotational central axis cnt is formed in the third bulkhead 34c, and one end section 12d of a rotor shaft 12b is inserted into an inside of that through hole 38. A first bearing 39 that rotatably supports the one end section 12d of the rotor shaft 12b is fitted into the through hole 38. A first boss section 40 extending to the engine 11 side in the axial direction is formed in the fourth bulkhead 34d, and a second bearing 41 that rotatably supports the other end section 12e of the rotor shaft 12b is disposed in the first boss section 40.

A third bearing 42 is disposed between the rotor shaft 12b and a leading end 20a of the input shaft 20. Therefore, the leading end 20a of the input shaft 20 is supported by the third bulkhead 34c and the fourth bulkhead 34d via the third bearing 42, the second bearing 41, and the rotor shaft 12b.

A sun gear shaft 44 is provided between the rotor shaft 12b and the input shaft 20. A spline ridge (not illustrated) is formed on an outer circumferential surface of the sun gear shaft 44. The rotor shaft 12b has a hollow section 12c configured therein, and a spline groove is formed on an inner circumferential surface of the hollow section 12c. The spline ridge is press fitted into the spline groove (not illustrated), whereby the sun gear shaft 44 rotates together with the rotor shaft 12b by spline coupling.

The first sun gear S1 is formed on the sun gear shaft 44. The first sun gear S1 engages with the plurality of first pinion gears P1. The plurality of first pinion gears P1 are supported freely rotatably by a plurality of first pinion shafts 45. The first carrier C1 is part of a first carrier assembly 49, and is formed integrally in the input shaft 20. The first carrier C1 has a plurality of shaft supporting holes 46 that rotatably support the first pinion shafts 45. The first carrier assembly 49 is formed by inserting into the shaft supporting hole 46 the first pinion shaft 45 that has been inserted through a shaft hole 47 of the first pinion gear P1 via a bearing 48.

A lubricating oil path is formed on an inside of the first pinion shaft 45. The lubricating oil path includes: a hollow section 51 extending in the axial direction; and a through hole 52 that penetrates outwardly in a radial direction from the hollow section 51.

The first ring gear R1 engages with the first pinion gear P1, and is coupled to the second sun gear S2 by a thin plate shaped coupling section 54.

The second sun gear S2 as part of a second carrier assembly 55 engages with the second pinion gear P2. The second carrier assembly 55 is configured similarly to the first carrier assembly 49, and has the second pinion gear P2, a second pinion shaft 57, the second carrier C2, a hollow section 58, and a through hole 59. The second carrier C2 is disposed freely rotatably with respect to the input shaft 20 by a first thrust bearing 61.

In the first planetary gear unit 14, a second thrust bearing 62 is disposed between the one end section 12d of the rotor shaft 12b and the sun gear shaft 44, and a third thrust bearing 63 is disposed between the sun gear shaft 44 and the first carrier C1. In other words, a position in the axial direction of the sun gear shaft 44 is fixed by the rotor shaft 12b and the first carrier C1.

In the second planetary gear unit 15, a fourth thrust bearing 64 is disposed between the first carrier C1 and the second sun gear S2, and, moreover, a fifth thrust bearing 65 is disposed between the second sun gear S2 and the second carrier C2. In other words, a position in the axial direction of the second sun gear S2 is fixed by the first carrier C1, the second carrier C2, and the input shaft 20.

The second pinion gear P2 engages with the second ring gear R2 as an output rotary member, and the second ring gear R2 and the output gear 18 are formed integrally in a cylindrical section 67. That is, the output gear 18 is formed in the cylindrical section 67 whose inner diameter is larger than an outer diameter of the first planetary gear unit 14, and teeth of the output gear 18 are formed in a central section (in the axial direction) on an outer circumferential surface of that cylindrical section 67. Moreover, the second ring gear R2 is formed in one end section (on the engine side) in the axial direction on an inner circumferential surface of the cylindrical section 67. An amplified torque of drive torque outputted from the engine 11 sometimes acts on the output gear 18. Therefore, the output gear 18 is formed such that its face width will be longer than a face width of the second ring gear R2. In this way, in the drive unit 10, the second ring gear R2 is directly coupled to the output gear 18.

A fifth bearing 69 is fitted onto one end section 67a of the cylindrical section 67, and a sixth bearing 70 is fitted onto the other end section 67b of the cylindrical section 67 across the output gear 18. In other words, the fifth bearing 69 is disposed between the one end section 67a of the cylindrical section 67 and an inner circumference of a second boss section 71 formed integrally in the second bulkhead 34b so as to project toward the first motor 12. On the other hand, the sixth bearing 70 is disposed between the other end section 67b of the cylindrical section 67 and an inner circumference of a third boss section 72 formed integrally in the third bulkhead 34c so as to project toward the engine 11 side. The second bulkhead 34b corresponds to "one of bulkheads" in the embodiment, and the third bulkhead 34c corresponds to "another bulkhead" in the embodiment. The fifth bearing 69 corresponds to "one of bearings" in the embodiment, and the sixth bearing 70 corresponds to "another bearing" in the embodiment.

Thus, the cylindrical section 67 has its one end section 67a and its other end section 67b rotatably supported by the bulkheads 34b, 34c of the housing 34 via the bearings 69, 70. That is, the output gear 18 is supported by each of the bulkheads 34b, 34c via the one end section 67a and the other end section 67b extending at both ends in the axial direction.

The second ring gear R2 is formed in a vicinity of the second bulkhead 34b, on the inner circumference in the cylindrical section 67, and the first planetary gear unit 14 is disposed in a radially inner space 74 of an inner smooth region 67c where the second ring gear R2 is not formed in the inner circumference of the cylindrical section 67. In the first planetary gear unit 14, an outer diameter of the first ring gear R1 is smaller than the inner diameter of the cylindrical section 67, and, moreover, a length in the axial direction of the first planetary gear unit 14 is shorter than a length in the axial direction of the cylindrical section 67. Note that the first planetary gear unit 14 may be disposed with part thereof protruding from the inner smooth region 67c in an opposite direction to the engine 11 side in the axial direction.

In the example shown in Fig. 2, a dog clutch is adopted as the first clutch device 16 and the second clutch device 17.

The first clutch device 16 includes a hub 76 of cylindrical shape, a first sleeve 77 of cylindrical shape, and first clutch teeth 78, and selectively couples the second carrier C2 and the first carrier C1. The hub 76 is formed extending toward the engine side in the axial direction from an outer circumferential side of the second carrier C2, and has spline teeth 79 formed on its outer circumference. The first sleeve 77 has first inner teeth 80 formed on its inner circumference. The spline teeth 79 and the first inner teeth 80 are provided so that at least parts thereof engage at all times and so that the first inner teeth 80 can move in an axis direction with respect to the spline teeth 79, so that a length of engagement of the spline teeth 79 and the first inner teeth 80 gets shorter according to a position of the first sleeve 77. The spline teeth 79 engage slidably with the first inner teeth 80. The first clutch teeth 78 are formed in a clutch ring 81. The clutch ring 81 is attached integrally to the input shaft 20, and rotates along with the first carrier C1. The first sleeve 77 is engaged by a first fork 82 on its outer circumference. The first fork 82 is pressed in the axial direction by drive of a first actuator 83. Therefore, by the first sleeve 77 moving to a position that the first inner teeth 80 engage with the first clutch teeth 78, power transmission is enabled between the first carrier C1 and the second carrier C2. Contrarily, by the first sleeve 77 moving so that the length of engagement of the spline teeth 79 and the first inner teeth 80 gets longer, power transmission is cut off between the first carrier C1 and the second carrier C2.

The second clutch device 17 includes the hub 76, a second sleeve 85 of cylindrical shape, and second clutch teeth 86 formed on an inner circumferential surface in one end section of the cylindrical section 67, and selectively couples the second carrier C2 and the second ring gear R2. Second inner teeth 87 that engage with the spline teeth 79 are formed on an inner circumference of the second sleeve 85. The spline teeth 79 and the second inner teeth 87 are provided so that at least parts thereof engage at all times and so as to be able to move in the axis direction according to a position of the second sleeve 85. Outer teeth 88 are formed on an outer circumference of the second sleeve 85, and a second fork 89 is coupled to a position adjacent in the axis direction to the outer teeth 88. The second fork 89 is pressed in the axial direction by drive of a second actuator 90. Therefore, by the second sleeve 85 moving to a position that the outer teeth 88 engage with the second clutch teeth 86, power transmission is enabled between the second carrier C2 and the second ring gear R2. Contrarily, by the second sleeve 85 moving in a direction of separation from the second clutch teeth 86, power transmission is cut off between the second carrier C2 and the second ring gear R2.

In this way, the first clutch device 16 and the second clutch device 17 are disposed on one side of the complex planetary gear unit PL in the axial direction. Specifically, in the example shown in Fig. 2, the first clutch device 16 and the second clutch device 17 are disposed between the complex planetary gear unit PL and the engine 11. Furthermore, the first actuator 83 and the second actuator 90 are disposed on an outer radial side of the first clutch device 16 and the second clutch device 17 and aligned in a radial direction. Note that the first actuator 83 and the second actuator 90 may be disposed aligned in the axial direction. As a result, the first clutch device 16 and second clutch device 17 or the first actuator 83 and second actuator 90 can be disposed brought close to each other, hence shortening of a length in the axial direction of the drive unit 10 can be achieved. In the drive unit 10 described in Fig. 2, a dog clutch is adopted as the first clutch device 16 and the second clutch device 17. Therefore, the spline teeth 79 can be shared and the length in the axial direction can be further shortened, for example.

In this way, in the embodiment described in Fig. 2, the first clutch device 16 and the second clutch device 17 are disposed in one open end of open ends on both sides in the axial direction of the inner circumference of the cylindrical section 67. Therefore, outer diameters of the first clutch device 16 and the second clutch device 17 are not restricted, hence tooth surface strength can be improved. Moreover, due to the present embodiment, only the coupling section 54 is disposed between the first planetary gear unit 14 and the second planetary gear unit 15. Therefore, by assembling the first planetary gear unit 14, the coupling section 54, and the second planetary gear unit 15 in order in the axial direction in the inner circumference of the cylindrical section 67, these members can be easily assembled in advance.

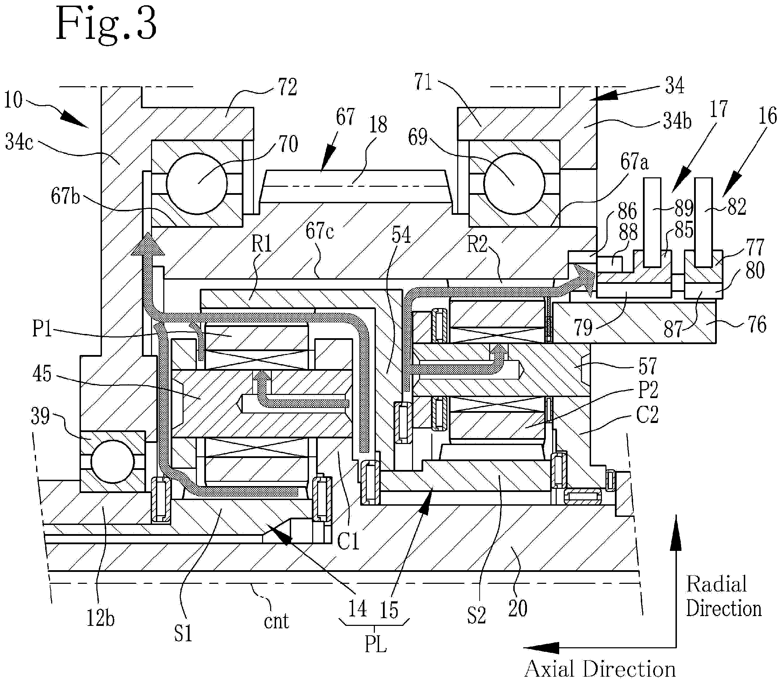

Fig. 3 is an enlarged cross-sectional view showing a supply path of a lubricating oil in the drive unit 10 shown in Fig. 2. As mentioned above, in the drive unit 10, the fifth bearing 69 and the sixth bearing 70 are fitted onto both ends of the cylindrical section 67. In other words, the fifth bearing 69 and the first planetary gear unit 14 are disposed concentrically, and the sixth bearing 70 and the second planetary gear unit 15 are disposed concentrically, hence the length in the axial direction of the drive unit 10 can be shortened.

Moreover, the lubricating oil is supplied to an inside of the housing 34. The lubricating oil is sprinkled by rotary operation of gears configured by the first planetary gear unit 14 and the second planetary gear unit 15. The sprinkled lubricating oil is supplied to the first pinion gear P1 and the second pinion gear P2 that are rotated at a high speed. As shown by the arrows in Fig. 3, the lubricating oil supplied to the second pinion gear P2 can be supplied to the first clutch device 16 and the second clutch device 17 by a shortest distance without detouring the fifth bearing 69. Therefore, there is no need for a dedicated oil path supplying the lubricating oil to the clutch devices 16, 17 to be provided by opening a hole in the likes of a rotating body or the housing, hence it can be prevented that strength of the rotating body or housing is lowered.

Due to the embodiment shown in Fig. 3, the fifth bearing 69 and the sixth bearing 70 are fitted onto both ends of the cylindrical section 67, hence the lubricating oil can be discharged along the axial direction from both side surfaces of the cylindrical section 67. Therefore, agitation loss caused by the lubricating oil accumulating on the inside of the cylindrical section 67 can be suppressed. In addition, the first clutch device 16 and the second clutch device 17 can be lubricated and cooled by the lubricating oil flowing to the engine 11 side from an inner surface of the cylindrical section 67.

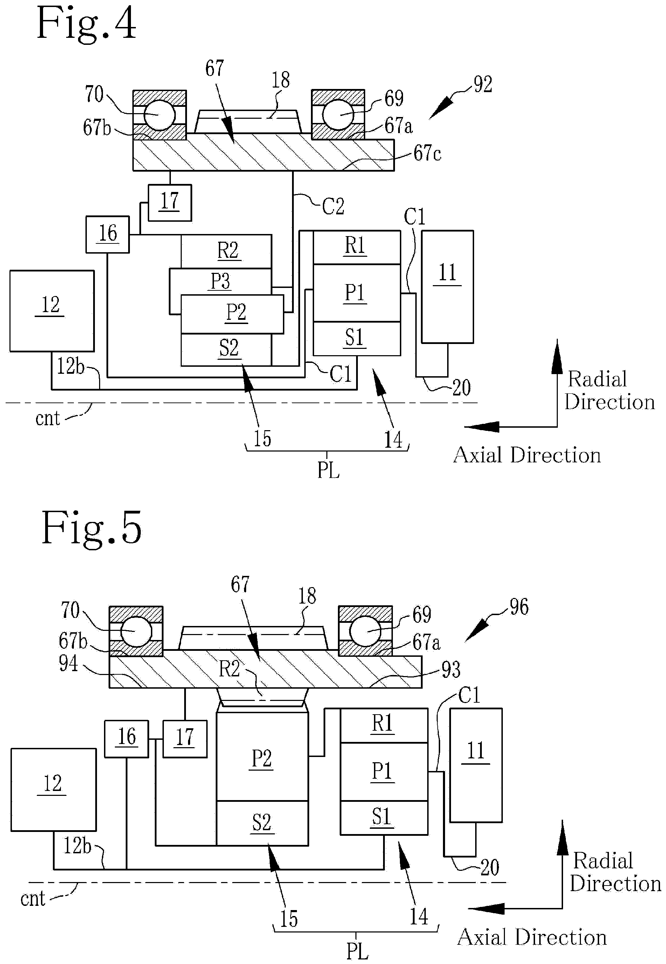

Fig. 4 is an explanatory view showing an embodiment of a drive unit 92 in which the ring gear is indirectly coupled to the inner circumference of the cylindrical section 67.

As shown in Fig. 4, in the drive unit 92, the first planetary gear unit 14 and a double pinion type second planetary gear unit 15 having second pinion gears P2, P3 are disposed adjacently in the axial direction so as to form the complex planetary gear unit PL. In addition, the first clutch device 16 and the second clutch device 17 are disposed on an opposite side to the first planetary gear unit 14 in the axial direction with respect to the second planetary gear unit 15. In other words, the first clutch device 16 and the second clutch device 17 are disposed between the second planetary gear unit 15 and the first motor 12. Note that bulkheads may be respectively provided between the first clutch device 16 and second clutch device 17 and the first motor 12, and, moreover, between the engine 11 and the first planetary gear unit 14. In the drawings from Fig. 4 onwards described below, depiction is made omitting the bulkheads.

The output gear 18 is formed integrally on the outer circumference of the cylindrical section 67. Moreover, the fifth bearing 69 is fitted onto the one end section 67a of the cylindrical section 67, and the sixth bearing 70 is fitted onto the other end section 67b of the cylindrical section 67 across the output gear 18. In this way, the cylindrical section 67 is supported by the housing 34 via the fifth bearing 69 and the sixth bearing 70. Therefore, the length in the axial direction of the cylindrical section 67 is longer than the face width of the output gear 18.

The ring gear is not formed in the inner circumferential section of the cylindrical section 67, and all of the inner circumferential section is configured as the inner smooth region 67c. The first planetary gear unit 14, the second planetary gear unit 15, and the second clutch device 17 are disposed, in order, from the engine 11 side, within the inner smooth region 67c. Note that part of the first planetary gear unit 14 or the second clutch device 17 may be disposed protruding in the axial direction from an inner circumferential length of the cylindrical section 67. Moreover, all or part of the first clutch device 16 may be disposed on an inner circumferential side of the inner smooth region 67c.

In the drive unit 92 shown in Fig. 4, the first carrier C1 (the first rotary element) as an input element has the input shaft 20 coupled thereto, and the first sun gear S1 (the second rotary element) as a reaction force element is coupled to the rotor shaft 12b of the first motor 12. The second carrier C2 serves as an output element, and the second sun gear S2 (the fifth rotary element) is coupled to the first ring gear R1 (the third rotary element). The first clutch device 16 selectively couples the first carrier C1 (the first rotary element) and the second ring gear R2 (the sixth rotary element), and the second clutch device 17 selectively couples the output gear 18 and the second ring gear R2 (the sixth rotary element). For example, a wet multiplate type clutch device may be adopted as the second clutch device 17. In this case, a clutch plate may be provided in the inner smooth region 67c of the cylindrical section 67, and a pressing member for pressing the clutch plate may be disposed on a first clutch device 16 side in the axial direction in the clutch plate. In this way, the second ring gear R2 is indirectly coupled to the output gear 18 via the second clutch device 17. In the drive unit 92 shown in Fig. 4, operating modes similar to those of the drive unit 10 shown in Fig. 1 can be set.

Fig. 5 is a view showing an embodiment of the drive unit in which the first clutch device 16 and the second clutch device 17 are disposed on the inner circumference of the cylindrical section 67. Specifically, in a drive unit 96, the first clutch device 16 and the second clutch device 17 are disposed on the inner circumference of the cylindrical section 67.

The second ring gear R2 (the fourth rotary element) whose face width is narrower than that of the output gear 18 is formed on the inner circumference of the cylindrical section 67. The second ring gear R2 is formed in a center of the inner circumference of the cylindrical section 67 or in a position shifted slightly more to an opposite side to the engine 11 side than the center of the inner circumference of the cylindrical section 67. Therefore, a first inner smooth region 93 and a second inner smooth region 94 are formed on both sides in the axial direction of the second ring gear R2, in the inner circumference of the cylindrical section 67. The first planetary gear unit 14 is disposed on an inner circumferential side of the first inner smooth region 93, and the first clutch device 16 and second clutch device 17 are disposed on an inner circumferential side of the second inner smooth region 94. Moreover, an order of aligning in the axial direction of the first clutch device 16 and the second clutch device 17 may be reversed. Furthermore, the first clutch device 16 and the second clutch device 17 may be disposed between the first planetary gear unit 14 and the engine 11.

In the drive unit 96 shown in Fig. 5, the input shaft 20 is coupled to the first carrier C1 (the first rotary element), the first sun gear S1 (the second rotary element) is coupled to the rotor shaft 12b of the first motor 12, and the first ring gear R1 (the third rotary element) is coupled to the second carrier C2 (the fifth rotary element). The first clutch device 16 selectively couples the first sun gear S1 (the second rotary element) and the second sun gear S2 (the sixth rotary element), and the second clutch device 17 selectively couples the second ring gear R2 (the fourth rotary element) and the second sun gear S2 (the sixth rotary element). In the drive unit 96 shown in Fig. 5, operating modes similar to those of the drive unit 10 shown in Fig. 1 can be set.

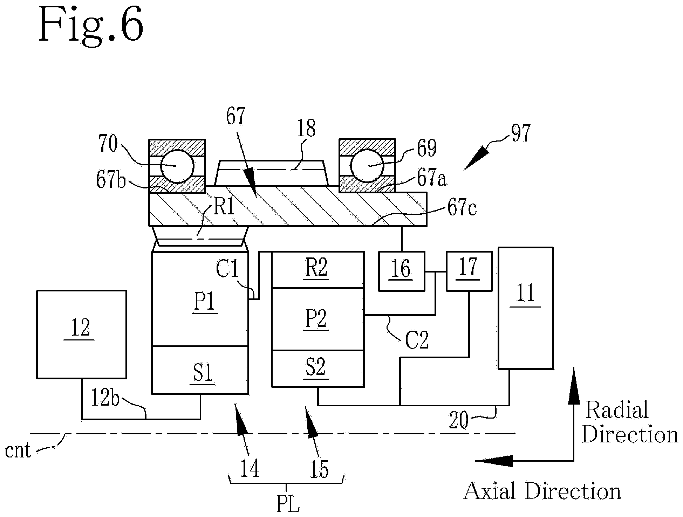

Fig. 6 is an explanatory view showing an embodiment of a drive unit 97 in which the first clutch device 16 and the second clutch device 17 are disposed aligned in the axial direction, on the engine 11 side in the axial direction with respect to the complex planetary gear unit PL.

As shown in Fig. 6, the drive unit 97 has the second planetary gear unit 15 and the first planetary gear unit 14 disposed adjacently in the axial direction in order from the engine 11 side. In addition, the first clutch device 16 and the second clutch device 17 are disposed on an opposite side to the first planetary gear unit 14 (the engine 11 side) in the axial direction with respect to the second planetary gear unit 15. The first clutch device 16 and the second clutch device 17 are disposed between the second planetary gear unit 15 and the engine 11.

The first ring gear R1 (the first rotary element) whose face width is narrower than that of the output gear 18 is formed on the inner circumference of the cylindrical section 67. The first ring gear R1 is formed in a position shifted more to an end on an opposite side to the engine 11 side (more to an end on a first motor 12 side) than the center of the inner circumference of the cylindrical section 67. Therefore, the inner smooth region 67c is formed on the engine 11 side with respect to the first ring gear R1, in the inner circumference of the cylindrical section 67, and the second planetary gear unit 15, the first clutch device 16, and the second clutch device 17 are disposed on the inner circumferential side of the inner smooth region 67c. Note that the first clutch device 16 and the second clutch device 17 may have their order of disposition in the axial direction reversed.

The second planetary gear unit 15 shown in Fig. 6 includes: the second sun gear (fourth rotary element) S2 as an input element, connected to the engine 11; the second carrier (sixth rotary element) C2; and the second ring gear (fifth rotary element) R2. Moreover, the first ring gear R1 provided integrally in the cylindrical section 67 serves as an output element. The first planetary gear unit 14 includes: the first carrier (third rotary element) C1 connected to the second ring gear R2; the first sun gear (second rotary element) S1 as a reaction force element, connected to the first motor 12; and the first ring gear (first rotary element) R1 to which the output gear 18 is directly coupled. The first clutch device 16 selectively couples the first ring gear R1 and the second carrier C2 (the sixth rotary element), and the second clutch device 17 selectively couples the second carrier C2 and the second sun gear S2.

In the drive unit 97 shown in Fig. 6, operating modes similar to those of the drive unit 10 shown in Fig. 1 can be set.

The first planetary gear unit 14 may have: a first rotary element to which any one of the engine 11, the motor-generator 12, and the drive wheel 30 is coupled; a second rotary element to which any other one of the engine 11, the motor-generator 12, and the drive wheel 30 is coupled; and a third rotary element. The second planetary gear unit 15 may have: a fourth rotary element to which yet another one of the engine 11, the motor-generator 12, and the drive wheel 30 is coupled; a fifth rotary element to which the third rotary element is coupled; and a sixth rotary element. The first engagement device 16 may be configured so as to selectively couple the sixth rotary element and the first rotary element or the second rotary element. The second engagement device 17 may be configured so as to selectively couple at least any two rotary elements of the fourth rotary element, the fifth rotary element, and the sixth rotary element.

A planetary gear unit of double pinion type, Ravigneaux type, or the like may be adopted as the first planetary gear unit 14 and the second planetary gear unit 15. Alternatively, the likes of a differential gear unit employing a bevel gear may also be adopted as the first planetary gear unit 14 and the second planetary gear unit 15.

Moreover, a planetary unit that transmits torque by a frictional force may be adopted as the first planetary gear unit 14 and the second planetary gear unit 15.

Moreover, a configuration may be adopted so that drive power outputted by the second motor 13 is transmitted to a different wheel from the wheel to which drive power of the first motor 12 is transmitted.

Although the above exemplary embodiments of the present application have been described, it will be understood by those skilled in the art that the present application should not be limited to the described exemplary embodiments, and various changes and modifications can be made within the spirit and scope of the present disclosure.

## Claims

1. A drive unit (10, 92, 96, 97) for a vehicle comprising:
an engine (11);
an output gear (18) of cylindrical shape coupled to a drive wheel (30);
a complex planetary unit (PL) formed by a first planetary unit (14) and a second planetary unit (15) that transmits to the drive wheel (30) a drive torque outputted from the engine (11);
a first engagement device (16) that, by coupling any two rotary elements (C1, C2) of the complex planetary unit (PL), establishes a predetermined torque transmission path in the complex planetary unit (PL); and
a second engagement device (17) that, by coupling any two rotary elements (C2, R2) of the complex planetary unit (PL), establishes another torque transmission path in the complex planetary unit (PL),
wherein the first planetary unit (14), the second planetary unit (15), the first engagement device (16), and the second engagement device (17) are disposed on a rotational central axis parallel to an output shaft (19) of the engine (11),
**characterized in that**:
the first planetary unit (14) and the second planetary unit (15) are disposed adjacently in the rotational axis direction on an inner circumferential side of the output gear (18),
any one rotary element (R1) of rotary elements configuring the first planetary unit (14) and any one rotary element (S2) of rotary elements configuring the second planetary unit (15) are coupled,
any one ring gear (R2) of a first ring gear (R1) in the rotary elements of the first planetary unit (14) and a second ring gear (R2) in the rotary elements of the second planetary unit (15) is coupled to the output gear (18), and
the first engagement device (16) and the second engagement device (17) are disposed on one side or the other side of the complex planetary unit (PL) in the rotational axis direction.

2. The drive unit (10, 92, 96, 97) for a vehicle according to claim 1, wherein
the output gear (18) is formed on an outer circumferential surface of a cylindrical section (67),
the one ring gear (R2) and an inner smooth region (67c) adjacent to the one ring gear (R2) are formed on an inner circumferential surface of the cylindrical section (67),
an inner diameter of the cylindrical section (67) is larger than an outer diameter of one of the planetary units (14) comprising the other ring gear (R1) of the first ring gear (R1) and the second ring gear (R2), and
the one of the planetary units (14) is disposed on an inner side of the inner smooth region (67c).

3. The drive unit (10, 92, 96, 97) for a vehicle according to claim 1, wherein
the output gear (18) is formed on an outer circumferential surface of a cylindrical section (67),
an inner diameter of the cylindrical section (67) is larger than outer diameters of the first planetary unit (14) and the second planetary unit (15), and
the first engagement device (16) and the second engagement device (17) are configured so as to selectively couple the cylindrical section (67) and the one ring gear (R2).

4. The drive unit (10, 92, 96, 97) for a vehicle according to any of claims 1 to 3, wherein
the first engagement device (16) and the second engagement device (17) are disposed adjacently in the rotational central axis direction.

5. The drive unit (10, 92, 96, 97) for a vehicle according to claim 3 or 4 citing claim 2, further comprising
a housing (34) that houses the first planetary unit (14), the second planetary unit (15), and the cylindrical section (67),
wherein one end section (67a) of the cylindrical section (67) is rotatably supported by one of bulkheads (34b) formed in the housing (34) via one of bearings (69), and
the other end section (67b) of the cylindrical section (67) is rotatably supported by another of bulkheads (34c) formed in the housing (34) via another of bearings (70).

6. The drive unit (10, 92, 96, 97) for a vehicle according to any of claims 1 to 5, further comprising
a motor-generator (12),
wherein the first planetary unit (14) comprises: a first rotary element (C1) to which any one (11) of the engine (11), the motor-generator (12), and the drive wheel (30) is coupled; a second rotary element (S1) to which any other one of the engine (11), the motor-generator (12), and the drive wheel (30) is coupled; and a third rotary element (R1),
the second planetary unit (15) comprises: a fourth rotary element (R2) to which yet another one of the engine (11), the motor-generator (12), and the drive wheel (30) is coupled; a fifth rotary element (S2) to which the third rotary element (R1) is coupled; and a sixth rotary element (C2),
the first engagement device (16) selectively couples the sixth rotary element (C2) and the first rotary element (C1) or the second rotary element (S1), and
the second engagement device (17) is configured so as to selectively couple at least any two rotary elements (C2, R2) of the fourth rotary element (R2), the fifth rotary element (S2), and the sixth rotary element (C2).
